# EUROPEAN PATENT SPECIFICATION

(11) **EP 2 192 744 B1**
(45) Date of publication and mention of the grant of the patent: **21.12.2011**
(21) Application number: 08800911.3
(22) Date of filing: 18.09.2008
(51) Int. Cl.: H04L 29/06, H04W 28/06

(54) **A METHOD, SYSTEM AND APPARATUS FOR SCHEDULING DATA**
EIN VERFAHREN, SYSTEM UND VORRICHTUNG ZUM ORDNEN VON DATEN
PROCÉDÉ, SYSTÈME ET APPAREIL DESTINÉS À ORGANISER DES DONNÉES

(30) Priority: 21.09.2007 CN 200710152276
(43) Date of publication of application: 02.06.2010
(73) Proprietor: Huawei Technologies Co., Ltd., Longgang District, Shenzhen Guangdong 518129 (CN)
(72) Inventor: ZHOU, Xiao, Shenzhen, Guangdong 518129 (CN); HUANG, Qufang, Shenzhen, Guangdong 518129 (CN); WANG, Junwei, Shenzhen, Guangdong 518129 (CN)
(74) Representative: Körber, Martin Hans
(86) International application number: PCT/CN2008/072417
(87) International publication number: WO 2009/039777

(56) References cited:
- WO-A1-03/071740
- WO-A1-2005/034418
- WO-A1-2005/120117
- WO-A1-2008/044124
- CN-A- 1 972 462
- US-A1- 2006 245 452
- US-A1- 2007 133 605
- MOTOROLA: "R2-061350 Centralized function for LTE MBMS", INTERNET CITATION, 4 May 2006 (2006-05-04), XP002471972, Retrieved from the Internet: URL:http://www.3gpp.org/ftp/tsg_ran/WG2_RL 2/TSGR2_53/Documents/ [retrieved on 2008-03-06]
- NTT DOCOMO: "Content synchronization scheme with segmentation and concatenation in eNB", 6 November 2006 (2006-11-06), 3GPP TSG RAN TECHNICAL REPORT,, PAGE(S) 1 - 5, XP007905363, * the whole document *
- NOKIA: "R3-061552 MBMS L transmission synchronization with segmentation and concatenation", INTERNET CITATION, 5 October 2006 (2006-10-05), XP002471975, Retrieved from the Internet: URL:http://www.3gpp.org/ftp/tsg_ran/WG3_lu /TSGR3_53bis/docs/ [retrieved on 2008-03-06]

## Description

### Field of the Invention

The present invention relates to communication technologies, and in particular, to a method, system, and apparatus for scheduling data.

### Background of the Invention

Nowadays, the network is developing rapidly, and people require more services than the basic telephone and message services in mobile communications. With the evolution of the network and mobile terminals, numerous mobile multimedia services are emerging, for example, Internet Protocol Television (IPTV), Video On Demand (VOD), video conference, online education, and online interactive games. Such services generally require enough bandwidths from the network, require high transmission quality, and need to be available to multiple users simultaneously. The existing networks that can transmit such services are only wired networks, and not wireless networks.

Therefore, the Third Generation Partnership Project (3GPP) puts forward a Multimedia Broadcast Multicast Service (MBMS) service, which sends the same data information to multiple users in a cell through a NodeB. In this way, point-to-multipoint services are available in the mobile communication network; network resources are shareable; and network sharing and bandwidth utilization are improved. The MBMS service implements multicast of pure texts and enables the multicast streaming service.

In the prior art, before the Packet Data Convergence Protocol (PDCP) packet in the MBMS service is sent to the E-UTRAN NodeB (eNB), a timestamp is affixed at the Synchronization Sub-layer (SYNC); the packet that has arrived at the eNB is split and concatenated by the Radio Link Control (RLC), and submitted to the Media Access Control (MAC) sublayer; the packet is sent to the transmission channel through the MAC sublayer, and is finally sent to the User Equipment (UE). The PDCP packet is called a PDCP Protocol Data Unit (PDU). The PDCP PDU is split by the RLC into RLC PDUs. The packet arriving at the MAC sublayer is called a MAC Service Data Unit (SDU). When multiple MAC SDUs from different logical channels are multiplexed onto the same transmission channel, the multiple MAC SDUs are encapsulated into a MAC PDU. In this way, multiple MAC SDUs from different logical channels are encapsulated in a MAC PDU.

In the prior art, supposing PDCP packets of service 0 and service 1 exist, after the packets are processed by the SYNC layer of the PDCP in the access Gateway (aGW), the SYNC affixes timestamps T and T+1 to the packets. After passing through the RLC, the PDCP packet of service 0 is split into four RLC PDUs: 0.0, 0.1, 0.2, and 0.3, and the PDCP packet of service 1 is split into four RLC PDUs: 1.0, 1.1, 1.2, and 1.3. Because only one timestamp can be affixed to each PDCP packet in the aGW, only the sending time of PDU 0.0 and PDU 1.0 can be ensured among the RLC PDUs that are generated out of the splitting. That is, PDU 0.0 is sent at time T, and PDU 1.0 is sent at time T+1. Supposing the MAC entity specifies that only three RLC PDUs can be sent within each Transmission Time Interval (TTI) and the length of the RLC PDU sent in each TTI is determined by the MAC entity according to the result of air interface measurement, the RLC PDUs 0.0, 0.1 and 0.2 of service 0 need to be sent within the first time T; the RLC PDU 1.0 needs to be sent at time T+1; and the RLC PDU 0.3 of service 0 is still not sent out and may be sent within another TTI. Because the eNBs may schedule the PDUs differently, the RLC PDUs sent by different eNBs at time T+1 may be different, for example, a combination of 1.0, 1.1 and 1.2, or a combination of 1.0, 1.1 and 0.3.

WO 2005/120117 A1 discloses conversion between SDUs transmitted between a central network controller and base stations and PDUs transmitted between the base stations and mobile terminals. For downlink communications, SDUs are transmitted from the central network controller and forwarded to the base stations in an active set. One base station will break down the SDUs to create PDUs to transmit to the mobile terminal. For uplink communications, the base station will receive PDUs from the mobile terminal, create SDUs from the PDUs, and transmit the SDUs to the central network controller. During switching events, continuity information received from a previously serving base station is processed by the mobile terminal and used to create continuity information to send to the currently serving base station and used to determine the appropriate PDU from which to start transmissions to the mobile terminal after the switching event.

WO 2008/044124 A1, prior art according to Article 54(3) EPC, discloses a method that includes receiving and storing a set of rules; receiving an initial data unit having an indication of a time to start a downlink multicast broadcast multimedia service transmission; forming transport blocks corresponding to the data unit in accordance with the stored set of rules; and transmitting at the indicated time the transport blocks formed in accordance with the rules. In a further aspect thereof the exemplary embodiments of this invention provide a method that includes creating a table of data unit processing rules in a wireless network node and distributing the table of data unit processing rules to individual ones of a plurality of base stations that form a part of a single frequency network established to transmit multicast broadcast multimedia service transmissions to at least one user equipment.

MOTOROLA : "R2-061350 Centralized function for LTE MBMS" , INTERNET CITATION, 4 May 2006(2006-05-04).XP02471972 discloses the essentiality of SFN transmission and a centralized function to coordinate the transmission from multiple cells, such as the scheduling and the segmentation function.

### Summary of the Invention

The embodiments of the present invention provide a method, system and apparatus for scheduling data to ensure consistency of MAC data scheduling between eNBs in the same Single Frequency network Area (SFA) and to enable a UE to perform air interface combination for received data.

A data scheduling method is provided in an embodiment of the present invention to schedule MAC data according to claim 1. The method includes: obtaining, by an evolved NodeB, eNB, data scheduling rules which comprise multiplexing criteria of MAC Protocol Data Units, PDUs, and rules of sequencing MAC Service Data Units, SDUs, inside MAC PDUs; wherein a process of obtaining the data scheduling rules comprises: setting the data scheduling rules through a Multimedia Broadcast Multicast Service Control Entity, MCE, control procedure, and configuring MAC-layer data scheduling rules of the eNB according to the data scheduling rules to make the MAC-layer data scheduling rules of multiple eNBs in the same Single Frequency network Area, SFA, be the same, said multiple eNBs comprising the eNB, wherein a process of setting the data scheduling rules through the MCE control procedure comprises: receiving a control message including the data scheduling rules from the MCE; sequencing, by the eNB, data of MAC SDUs inside MAC PDUs in received MAC data according to the rules of sequencing MAC SDUs; and multiplexing, by the eNB, the data of the sequenced MAC SDUs according to the multiplexing criteria of MAC PDUs.

A data scheduling system for scheduling MAC data is provided in an embodiment of the present invention according to independent claim 11. The system includes an eNB, arranged to: obtain data scheduling rules which comprise multiplexing criteria of Media Access Control Protocol Data Units, MAC PDUs, and rules of sequencing MAC Service Data Units, SDUs, inside MAC PDUs, sequence data of MAC
SDUs inside MAC PDUs in received MAC data according to the rules of sequencing MAC SDUs, and multiplex the data of the sequenced MAC SDUs according to the multiplexing criteria of MAC PDUs;
wherein for a process of obtaining the data scheduling rules, the eNB is arranged to the data scheduling rules through a Multimedia Broadcast Multicast Service Control Entity, MCE, control procedure, and configure MAC-layer data scheduling rules of the eNB according to the data scheduling rules to make the MAC-layer data scheduling rules of multiple eNBs in the same Single Frequency network Area, SFA, be the same, said multiple eNBs comprising the eNB, and wherein for a process of setting the data scheduling rules through the MCE control procedure, the eNB is arranged to receive a control message including the data scheduling rules from the MCE.

An eNB for scheduling MAC data is provided in an embodiment of the present invention according to independent claim 10. The eNB comprises: a data scheduling rule obtaining unit (210), arranged to obtain data scheduling rules which comprise multiplexing criteria of MAC Protocol Data Units, PDUs and rules of sequencing MAC Service Data Units, SDUs, inside MAC PDUs. wherein for a process of obtaining the data scheduling rules, the eNB is arranged to the data scheduling rules through a Multimedia Broadcast Multicast Service Control Entity, MCE, control procedure, and configure MAC-layer data scheduling rules of the eNB according to the data scheduling rules to make the MAC-layer data scheduling rules of multiple eNBs in the same Single Frequency network Area, SFA, be the same, said multiple eNBs comprising the eNB, wherein for a process of setting the data scheduling rules through the MCE control procedure, the eNB is arranged to receive a control message including the data scheduling rules from the MCE; a MAC SDU sequencing unit (220), arranged to sequence data of MAC SDUs inside MAC PDUs in received MAC data according to the MAC SDU sequencing rules obtained by the data scheduling rule obtaining unit (210); and a MAC PDU multiplexing unit (230), arranged to multiplex the data of the MAC SDUs sequenced by the MAC SDU sequencing unit according to the multiplexing criteria of MAC PDUs obtained by the data scheduling rule obtaining unit (210).

### Brief Description of the Drawing

FIG. 1 shows a structure of a data scheduling system in an embodiment of the present invention; and
FIG 2 is a flowchart of a data scheduling method in an embodiment of the present invention;
FIG 3 shows how to obtain data scheduling rules in a first embodiment of the present invention;
FIG 4 shows how to obtain data scheduling rules in a second embodiment of the present invention;
FIG 5 is a data scheduling diagram in a third embodiment of the present invention; and
FIG 6 is a data scheduling diagram in a fourth embodiment of the present invention.

### Detailed Description of the Embodiments

The embodiments of the present invention provide a method, system and apparatus for scheduling data, and use two solutions to ensure that the same data scheduling rules are applied in all eNBs in the same SFA. One solution is to set MAC data scheduling rules in MAC specification; and the other solution is to set MAC data scheduling rules through a Multimedia Broadcast Multicast Service (MBMS) Control Entity (MCE) control procedure. Through the Operations and Maintenance (O&M) configuration, the MAC layers of multiple eNBs have the same data scheduling rules. Therefore, it is ensured that all eNBs in the same SFA use the same data scheduling rules, and it is convenient for the UE to perform air interface combination for the data received from the eNBs.

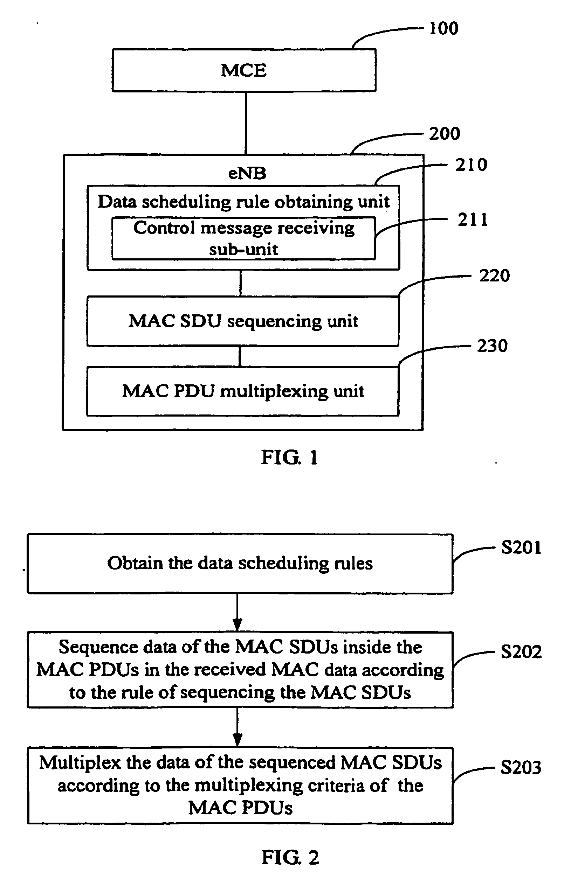

FIG 1 shows a structure of a data scheduling system in an embodiment of the present invention. The data scheduling system includes an eNB 200. The eNB 200 is configured to: obtain data scheduling rules, where the MAC layers of multiple eNBs have the same data scheduling rules through O&M configuration, and schedule the received MAC data according to the data scheduling rules. The data scheduling rules include multiplexing criteria of MAC PDUs and rules of sequencing MAC SDUs inside the MAC PDUs. Through the data scheduling rules, it is ensured that all eNBs in the same SFA use the same MAC data scheduling rules, and it is convenient for the UE to perform air interface combination for the received data.

The eNB 200 includes: a data scheduling rule obtaining unit 210, a MAC SDU sequencing unit 220, and a MAC PDU multiplexing unit 230. The data scheduling rule obtaining unit 210 is configured to obtain data scheduling rules which include multiplexing criteria of MAC PDUs and rules of sequencing MAC SDUs inside the MAC PDUs. The data scheduling rule obtaining unit 210 can obtain the data scheduling rules in two modes: set a data scheduling rule in MAC specification, or set a data scheduling rule through an MCE control procedure. The MAC SDU sequencing unit 220 is connected to the data scheduling rule obtaining unit 210 and is configured to sequence data of the MAC SDUs inside the received MAC PDUs according to the MAC SDU sequencing rules obtained by the data scheduling rule obtaining unit 210. The rule of sequencing the MAC SDUs inside the MAC PDUs may be but is not limited to ascending order of Logical Channel Identifiers (LCIDs), and descending order of LCIDs. The MAC PDU multiplexing unit 230 is connected to the data scheduling rule obtaining unit 210 and is configured to multiplex the data of the sequenced MAC SDUs according to the MAC PDU multiplexing criteria obtained by the data scheduling rule obtaining unit 210. The multiplexing criteria of MAC PDUs include: rule of sequential sending, rule of avoiding cross multiplexing, and rule of sending the service of higher priority first, which can be used separately or jointly. The MAC PDU multiplexing criteria and the rules of sequencing the MAC SDUs in the MAC PDUs may include multiple sequencing rules, which fall within the scope of protection of the present invention only if it is ensured that all eNBs in the same SFA generate the same MAC data sequencing rules.

Preferably, the data scheduling system in this embodiment further includes an MCE 100, configured to send a control message to the eNB 200. The control message carries data scheduling rules, and may carry a service ID, a service type, Quality of Service (QoS), Radio Bearer (RB) configuration, an LCID, and a service priority ID. Preferably, the data scheduling rule obtaining unit 210 further includes a control message receiving sub-unit 211, configured to receive the control message sent by the MCE 100.

FIG 2 is a flowchart of a data scheduling method in an embodiment of the present invention. The method includes the following steps:
Step S201: Obtain data scheduling rules.

The data scheduling rules include the multiplexing criteria of MAC PDUs and the rules of sequencing MAC SDUs in the MAC PDUs. The multiplexing criteria of the MAC PDUs refer to sequencing and scheduling of multiple MAC PDUs multiplexed onto the same transmission channel. The multiplexing criteria of the MAC PDUs include: rule of sequential sending, rule of avoiding cross multiplexing, rule of sending the service of higher priority first, and so on. The rule of sequential sending is: The MCE specifies the sequence of sending the MAC PDUs, and schedules the data of the MAC PDUs according to a "fust come first transmitted" rule on the basis of observing the timestamp rule. The rule of avoiding cross multiplexing enables the MAC SDUs of the same service to be multiplexed into the same MAC PDU. That is, the MAC SDU of one service is scheduled after completion of scheduling the MAC SDU of another. The rule of transmitting the service of higher priority first is: The central node tells the priority of each service to the eNB, and schedules the data of the MAC PDU according to the order of priority. If two or more services have the same priority, the service is scheduled in ascending or descending order according to the LCID of the service. The rule of sequencing the MAC SDUs inside the MAC PDUs is: Multiple MAC SDUs inside the MAC PDUs are sequenced and scheduled according to a unified sequencing rule to ensure that all eNBs inside the same SFA apply the same sequencing rule to such MAC SDUs. The rule of sequencing the MAC SDUs inside the MAC PDUs comes in many types, and is exemplified by an LCID ascending rule and an LCID descending rule herein. It is necessary to note that: The multiplexing criteria of the MAC PDUs and the rules of sequencing the MAC SDUs inside the MAC PDUs in the embodiments of the present invention are not limited to the foregoing rules. Any data scheduling rule that ensures all eNBs inside the SFA to use the same rule for sequencing and generates the same MAC SDU shall fall within the scope of protection of the present invention as set forth in the appended claims.
Step S202: Sequence data of the MAC SDUs inside the MAC PDUs in the received MAC data according to the rule of sequencing the MAC SDUs.

After receiving the MAC data, the eNB sequences the MAC SDU data inside the MAC PDUs in the received MAC data according to the rule of sequencing the MAC SDUs inside the MAC PDUs in the data scheduling rules.
Step S203: Multiplex the data of the sequenced MAC SDUs according to the multiplexing criteria of the MAC PDUs.

After the MAC SDUs inside the MAC PDUs are sequenced, the data of the sequenced MAC SDUs is multiplexed according to the multiplexing criteria of the MAC PDUs.

In this way, because all eNBs in one SFA use the same data scheduling rules, it is ensured that all UEs in the SFA receive the MAC data of the same structure, and it is convenient for the UE to perform air interface combination for the received MAC data.

In the foregoing data scheduling method, the eNB obtains the data scheduling rule in two modes: set a data scheduling rule through an MCE control procedure, add the data scheduling rule to a control message, and send the control message to the eNB for storing; or, set a data scheduling rule in the MAC specification, and store the data scheduling rule into the eNB. In conclusion, in the embodiments of the present invention, through setting of a MAC data scheduling rule and O&M configuration, multiple eNBs have the same MAC-layer rule, and all eNBs in one SFA use the same MAC data scheduling rule. Therefore, it is ensured that the MAC data scheduling is consistent for all eNBs in one SFA, and it is convenient for the UE to perform air interface combination for the received MAC data. Besides, the embodiments of the present invention are not only applicable to the scenario where a timestamp is affixed to every MAC SDU, but also applicable to the scenario of cyclical timestamp and alternate timestamp. The MAC automatically shifts to the next TTI for scheduling upon completion of scheduling within a TTI.

The present invention is hereinafter described in detail with reference to the accompanying drawings and exemplary embodiments.

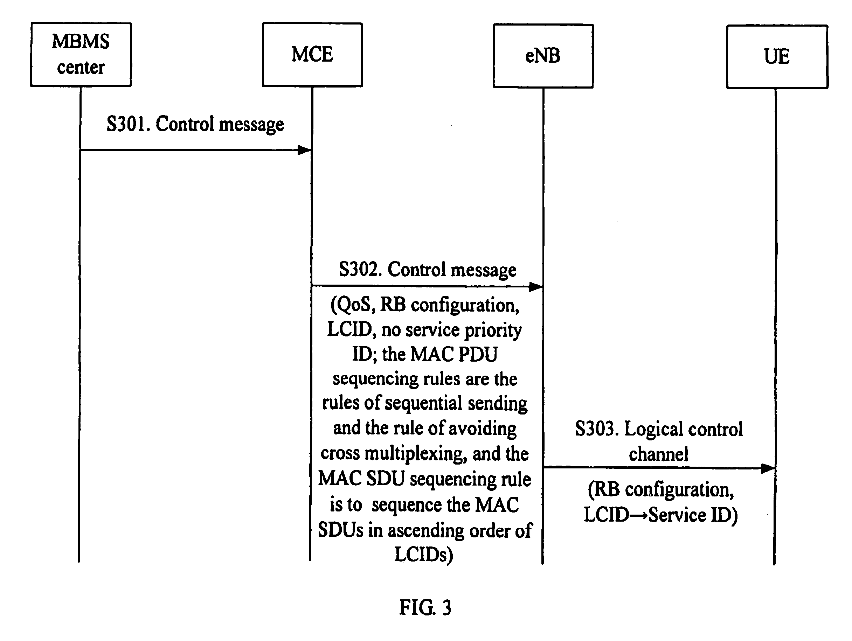

A data scheduling rule is set in the MCE control procedure, and carried in a control message which is to be sent to the eNB for storing. As shown in FIG. 3, the process includes the following steps:
Step S301: The BM-SC delivers a control message (such as session start) to the MCE.

The control message in this embodiment is not limited to session start. The control message carries basic information such as service ID and service type.
Step S302: The MCE decides to send the MBMS service in Single Frequency Network (SFN) mode, and sends the control message to all eNBs in the SFA.

The MCE adds a data scheduling rule to the control message, which may further carry information such as QoS, RB configuration, LCID, and service priority ID. The LCID is a logical channel identifier that marks each MAC SDU from the logical channel, and the service priority ID marks the service priority.
Step S303: The eNB stores the received control message, obtains the data scheduling rule of the MAC according to the control message, obtains the mapping between the service ID and the LCID, and sends the mapping to each UE under the eNB. The UE stores the mapping.

In this embodiment, a data scheduling rule is set in the MCE control procedure and carried in a control message which is then sent to the eNB for storing. Therefore, all eNBs in one SFA use the same MAC data scheduling rule; it is ensured that the MAC data scheduling is consistent for all eNBs in the same SFA; and it is convenient for the UE to perform air interface combination for the received data.

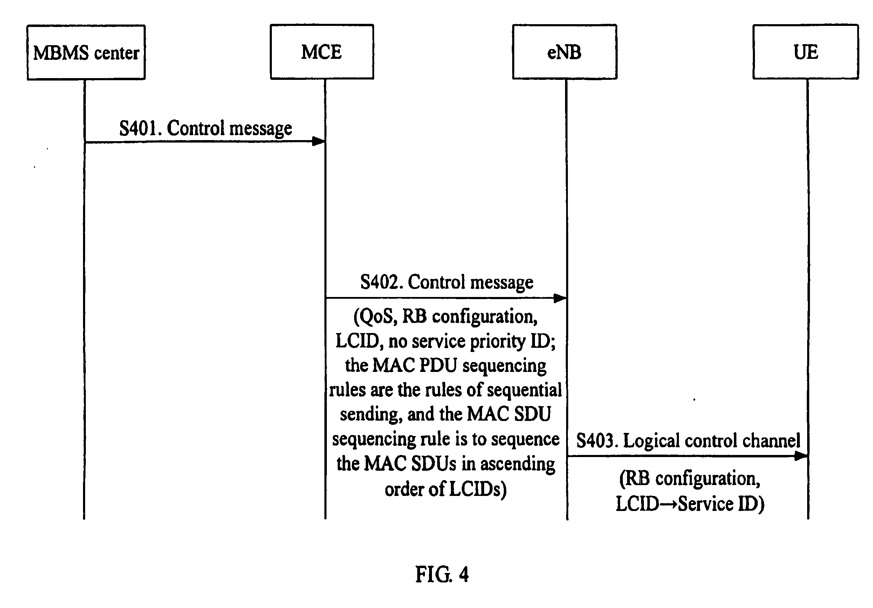

FIG 4 shows a process of setting a data scheduling rule in MAC specification and storing the data scheduling rule into an eNB. The process includes the following steps:
Step S401: The BM-SC delivers a control message to the MCE. The control message carries basic information such as service ID and service type.
Step S402: The MCE decides to send the MBMS service in SFN mode, and sends the control message to all eNBs in the SFA. The MCE adds information such as QoS, RB configuration, LCID, and service priority ID to the control message. Because the data scheduling rule is already set in the MAC specification and stored in the eNB, the control message sent by the MCE to the eNB does not necessarily carry the data scheduling rule.
Step S403: The eNB stores the received control message, obtains the mapping between the service ID and the LCID according to the control message, and sends the mapping to each UE under the eNB. The UE stores the mapping.

In this embodiment, a data scheduling rule is set in the MAC specification and stored in the eNB. Therefore, all eNBs in one SFA use the same MAC data scheduling rule; it is ensured that the MAC data scheduling is consistent for all eNBs in the same SFA; and it is convenient for the UE to perform air interface combination for the received data.

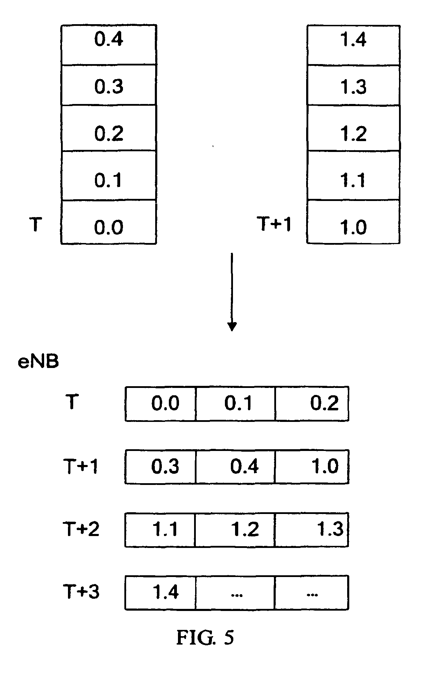

FIG 5 shows MAC scheduling under the rule of sequential sending. On the basis of observing the timestamp rule, the remaining MAC PDUs are scheduled according to a "first come first transmitted" rule. Because the packets from the aGW to the eNB do not necessarily arrive sequentially, the packet with an earlier timestamp may arrive at the eNB later than the packet with a later timestamp. Sequential sending refers to scheduling and sending the packets in the order of the timestamps affixed to the packets. In FIG 5, the packet of service 1 may arrive at the eNB first, and the packet of service 0 may arrive at the eNB later. However, the timestamp carried in service 0 is earlier. In this case, the packet of service 0 needs to be scheduled first. If the services have the same priority, the packet of service I is scheduled after completion of scheduling packets of services 0.0-0.4. The detailed sending sequence is as follows:
T: 0.0, 0.1, 0.2;
T+1: 0.3, 0.4, 1.0
T+2: 1.1, 1.2, 1.3
T+3: 1.4, ..., ...

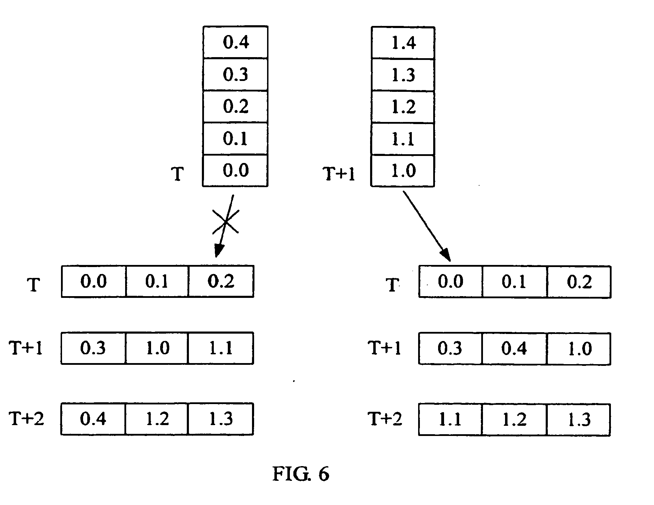

FIG. 6 shows MAC scheduling based on the rule of avoiding cross multiplexing. In the MAC multiplexing, it is better to avoid cross multiplexing of the PDCP packets of two services; and it is better to multiplex the MAC SDUs of the same service into the same MAC PDU, which means the MAC SDU of one service is scheduled after completion of scheduling the MAC SDU of another. As shown in FIG.6, the timestamp carried in the MAC SDU data of service 0 in the left column is time T, and the timestamp carried in the packet of service 1 in the right column is time T+1. At time T, the MAC SDUs included in a MAC PDU packet transmitted by a MAC entity are 0.0, 0.1, and 0.2. At T+1 and T+2, the MAC SDU of service 0 is scheduled first, and then the MAC SDU of service 1 is scheduled. The detailed sending sequence is as follows:
T: 0.0, 0.1, 0.2;
T+1: 0.3, 0.4, 1.0
T+2: 1.1, 1.2, 1.3
...

If cross multiplexing is avoided, few MAC PDUs are affected by loss of the data transmitted from the aGW to the eNB, and the probability of affecting the MAC PDUs is lower. For example, in the services 1.1, 1.2 and 1.3 sent at T+2, when packet loss occurs, because all the lost data is the data of service 1, the data loss affects only service 1; if cross multiplexing exists in the data sent at T+2, for example, 1.1, 1.2, and 0.4, when the packet loss occurs, because the lost data includes the data of service 0 and the data of service 1, the data loss affects both service 0 and service 1.Meanwhile, FIG 6 reveals that: When the MAC SDU data is multiplexed in the mode illustrated on the left side, if the data transmitted from the aGW to the eNB involves packet loss, the packet loss affects the MAC PDUs sent at T, T+1 and T+2; if the MAC SDU data is multiplexed in the mode illustrated on the right side, the packet loss affects only the MAC PDUs sent at T+1, thus reducing the probability of affecting the MAC PDUs when packet loss occurs in the data transmitted from the aGW to the eNB.

The rule of sending the service of higher priority first is applicable if the control message sent by the MCE to the eNB carries the priority information of each service, namely, carries the service priority ID. If the service scheduling is priority-sensitive, the services need to be scheduled according to the priority. Higher priority makes the service be scheduled first, and lower priority makes the service be scheduled later. It is necessary to note that if two or more services have the same priority, the services are scheduled in ascending or descending order of the LCIDs of the services. Moreover, the services of higher priority may be multiplexed onto a transmission channel different from the transmission channel of other services.

Besides, the rules of sequencing the MAC SDUs inside the MAC PDUs include: LCID ascending rule, and LCID descending rule. An LCID is a logical channel identifier of a MAC SDU. In the same transmission channel, the LCID varies with services. In the same SFA, all eNBs allocate the same LCID to the same service. The LCID ascending rule requires the MAC SDUs inside a MAC PDU to be arranged in ascending order of LCIDs, and the LCID descending rule requires the MAC SDUs inside a MAC PDU to be arranged in descending order of LCIDs.

Through the foregoing MAC PDU multiplexing criteria and MAC SDU sequencing rules, it is ensured that all eNBs inside one SFA generate the same MAC SDU.

The data scheduling process under the present invention is detailed below through examples. It is assumed that: there are two streaming services 0 and 1; the LCID corresponding to service 0 is 1; the LCID corresponding to service 1 is 2; and the MAC data of service 0 and service 1 is split into five MAC SDUS, namely, 0.0, 0.1, 0.2, 0.3, 0.4, and 1.0, 1.1, 1.2, 1.3, 1.4, respectively. The MCE notifies the service-related RB configuration, QoS and service LCID to the eNB through a session start message; MAC PDUs of services have the same priority and are sent according to the rule of sequential sending and the rule of avoiding cross multiplexing; the MAC SDUs need to be sequenced in ascending order of LCIDs inside the MAC PDUs; and therefore, multiple eNBs inside one SFA use the same scheduling criteria. The generated MAC PDUs are shown in FIG 5:
T: 0.0, 0.1, 0.2;
T+1: 0.3, 0.4, 1.0
T+2: 1.1, 1.2, 1.3
T+3: 1.4, ..., ...

It is necessary to note that multiple data scheduling rules herein may be applied separately or applied together, which falls within the scope of protection of the present invention only if the service scheduling performed by all eNBs is based on the same data scheduling rule or the same combination of the rules.

In the method, system and apparatus for scheduling data in the embodiments of the present invention, through the setting of a MAC data scheduling rule and O&M configuration, multiple eNBs have the same MAG-layer rule, and all eNBs in one SFA use the same MAC data scheduling rule. Therefore, it is ensured that the MAC data scheduling is consistent for all eNBs in one SFA, and it is convenient for the UE to perform air interface combination for the received data.

Based on the descriptions of the preceding embodiments, those skilled in the art may understand that the present invention may be implemented by hardware only or by software and a necessary universal hardware platform. The technical solution of the present invention may be embodied by a software product which may be stored in a nonvolatile storage medium. The storage medium can be a Compact Disk Read-Only Memory (CD-ROM), a USB disk, or a mobile hard disk. The software product includes a number of instructions that enable a computer device (such as a personal computer, a server, or a network device) to execute the methods provided in the embodiments of the present invention.

The above descriptions are merely exemplary embodiments of the present invention, but not intended to limit the scope of the present invention. Any modification, equivalent replacement, or improvement made without departing from the principle of the present invention should fall within the scope of the present invention as set forth in the appended claims.

## Claims

1. A data scheduling method for scheduling Media Access Control, MAC, data, **characterized by** comprising:
obtaining, by an evolved NodeB, eNB, data scheduling rules (S201) which comprise multiplexing criteria of MAC Protocol Data Units, PDUs, and rules of sequencing MAC Service Data Units, SDUs, inside MAC PDUs;
wherein a process of obtaining the data scheduling rules comprises: setting the data scheduling rules through a Multimedia Broadcast Multicast Service Control Entity, MCE, control procedure, and configuring MAC-layer data scheduling rules of the eNB according to the data scheduling rules to make the MAC-layer data scheduling rules of multiple eNBs in the same Single Frequency network Area, SFA, be the same, said multiple eNBs comprising the eNB,
wherein a process of setting the data scheduling rules through the MCE control procedure comprises: receiving a control message (S301) including the data scheduling rules from the MCE (S302);
sequencing, by the eNB, data of MAC SDUs inside MAC PDUs in received MAC data according to the rules of sequencing MAC SDUs (S202); and
multiplexing, by the eNB, the data of the sequenced MAC SDUs according to the multiplexing criteria of MAC PDUs (S203);

2. The data scheduling method of claim 1, wherein:
the rules of sequencing MAC SDUs inside MAC PDUs at least comprise a Logical Channel Identifier, LCID, ascending rule;
the process of sequencing MAC SDU data inside MAC PDUs in received MAC data according to the rules of sequencing MAC SDUs comprises: sequencing the MAC SDU data inside MAC PDUs in the received MAC data according to the LCID ascending rule;
or, the rules of sequencing MAC SDUs inside MAC PDUs at least comprise an LCID descending rule; and
the process of sequencing the MAC SDU data inside MAC PDUs in received MAC data according to the rules of sequencing the MAC SDUs comprises: sequencing the MAC SDU data inside MAC PDUs in the received MAC data according to the LCID descending rule.

3. The data scheduling method of claim 1 or 2, wherein:
the multiplexing criteria of MAC PDUs at least comprise a rule of sequential sending; and
the process of multiplexing the data of the sequenced MAC SDUs according to the multiplexing criteria of MAC PDUs comprises: multiplexing the data of the sequenced MAC SDUs according to the rule of sequential sending.

4. The data scheduling method of claim 3, wherein the process of multiplexing the data of the sequenced MAC SDUs according to the rule of sequential sending comprises:
multiplexing the data of the sequenced MAC SDUs according to a "first come first transmitted" rule.

5. The data scheduling method of one of the claims 1 to 4, wherein:
the multiplexing criteria of MAC PDUs at least comprise a rule of avoiding cross multiplexing; and
the process of multiplexing the data of the sequenced MAC SDUs according to the multiplexing criteria of MAC PDUs comprises: multiplexing the data of the sequenced MAC SDUs according to the rule of avoiding cross multiplexing.

6. The data scheduling method of claim 5, wherein the process of multiplexing the data of the sequenced MAC SDUs according to the rule of avoiding cross multiplexing comprises:
multiplexing the data of the sequenced MAC SDUs of one service first; and
multiplexing the data of the sequenced MAC SDUs of another service after completion of multiplexing the data of the sequenced MAC SDUs of the service.

7. The data scheduling method of one of the claims 1 to 6, wherein:
the multiplexing criteria of MAC PDUs at least comprise a rule of sending a higher-priority service first; and
the process of multiplexing the data of the sequenced MAC SDUs according to the multiplexing criteria of MAC PDUs comprises: multiplexing the data of the sequenced MAC SDUs according to the rule of sending the higher-priority service first.

8. The data scheduling method of claim 7, wherein the process of multiplexing the data of the sequenced MAC SDUs inside MAC PDUs according to the rule of sending the higher-priority service first comprises:
determining priority of services; and
multiplexing the data of the sequenced MAC SDUs of the higher-priority service first.

9. The data scheduling method of claim 8, wherein after determining the priority of the services, the method further comprises:
scheduling the data of the sequenced MAC SDUs of the services according to ascending or descending order of Logical Channel Identifiers, LCIDs, of the services if two or more services have the same priority.

10. An evolved NodeB, eNB, for scheduling Media Access Control ,MAC , data, **characterized by** comprising:
a data scheduling rule obtaining unit (210), arranged to obtain data scheduling rules which comprise multiplexing criteria of MAC Protocol Data Units, PDUs, and rules of sequencing MAC Service Data Units, SDUs, inside MAC PDUs;
wherein for a process of obtaining the data scheduling rules, the eNB is arranged to the data scheduling rules through a Multimedia Broadcast Multicast Service Control Entity, MCE, control procedure, and configure MAC-layer data scheduling rules of the eNB according to the data scheduling rules to make the MAC-layer data scheduling rules of multiple eNBs in the same Single Frequency network Area, SFA, be the same, said multiple eNBs comprising the eNB,
wherein for a process of setting the data scheduling rules through the MCE control procedure, the eNB is arranged to receive a control message including the
data scheduling rules from the MCE;
a MAC SDU sequencing unit (220), arranged to sequence data of MAC SDUs inside MAC PDUs in received MAC data according to the MAC SDU sequencing rules obtained by the data scheduling rule obtaining unit (210); and
a MAC PDU multiplexing unit (230), arranged to multiplex the data of the MAC SDUs sequenced by the MAC SDU sequencing unit according to the multiplexing criteria of MAC PDUs obtained by the data scheduling rule obtaining unit (210).

11. A data scheduling system for scheduling media access control, MAC, data, **characterized by** comprising:
an evolved NodeB, eNB, arranged to: obtain data scheduling rules which comprise multiplexing criteria of Media Access Control Protocol Data Units, MAC PDUs, and rules of sequencing MAC Service Data Units, SDUs, inside MAC PDUs, sequence data of MAC SDUs inside MAC PDUs in received MAC data according to the rules of sequencing MAC SDUs, and multiplex the data of the sequenced MAC SDUs according to the multiplexing, criteria of MAC PDUs;
wherein for a process of obtaining the data scheduling rules, the eNB is arranged to the data scheduling rules through a Multimedia Broadcast Multicast Service Control Entity, MCE, control procedure, and configure MAC-layer data scheduling rules of the eNB according to the data scheduling rules to make the MAC-layer data scheduling rules of multiple eNBs in the same Single Frequency network Area, SFA, be the same, said multiple eNBs comprising the eNB, and
wherein for a process of setting the data scheduling rules through the MCE control procedure, the eNB is arranged to receive a control message including the data scheduling rules from the MCE.

## Patentansprüche

1. Daten-Scheduling-Verfahren zum Scheduling von Daten der Media Access Control bzw. MAC, **dadurch gekennzeichnet, dass** es Folgendes umfasst:
Erhalten von Daten-Scheduling-Regeln (S201), die Kriterien des Multiplexens von Protocol Data Units bzw. PDUs der MAC und Regeln des Sequenzierens von Service Data Units bzw. SDUs der MAC innerhalb von MAC-PDUs umfassen, durch einen evolvierten NodeB bzw. eNB;
wobei ein Prozess des Erhaltens der Daten-Scheduling-Regeln Folgendes umfasst:
Setzen der Daten-Scheduling-Regeln durch eine Steuerprozedur der Multimedia Broadcast Multicast Service Control Entity MCE und Konfigurieren von MAC-Schicht-Daten-Scheduling-Regeln des eNB gemäß den Daten-Scheduling-Regeln, damit die MAC-Schicht-Daten-Scheduling-Regeln mehrerer eNBs in demselben Single Frequency Network Area SFA dieselben werden, wobei die mehreren eNBs den eNB umfassen,
wobei ein Prozess des Setzens der Daten-Scheduling-Regeln durch die MCE-Steuerprozedur Folgendes umfasst: Empfangen einer Steuemachricht (S301), die die Daten-Scheduling-Regeln enthält, von der MCE (S302);
Sequenzieren von Daten von MAC-SDUs innerhalb von MAC-PDUs in empfangenen MAC-Daten durch den eNB gemäß den Regeln des Sequenzierens von MAC-SDUs (S202); und
Multiplexen der Daten der sequenzierten MAC-SDUs durch den eNB gemäß den Kriterien des Multiplexens von MAC-PDUs (S203).

2. Daten-Scheduling-Verfahren nach Anspruch 1, wobei
die Regeln des Sequenzierens von MAC-SDUs innerhalb von MAC-PDUs mindestens eine Aufstiegsregel des Logical Channel Identifier LCID umfassen;
der Prozess des Sequenzierens von MAC-SDU-Daten innerhalb von MAC-PDUs in empfangenen MAC-Daten gemäß den Regeln des Sequenzierens von MAC-SDUs Folgendes umfasst: Sequenzieren der MAC-SDU-Daten innerhalb von MAC-PDUs in den empfangenen MAC-Daten gemäß der LCID-Aufstiegsregel;
oder die Regeln des Sequenzierens von MAC-SDUs innerhalb von MAC-PDUs mindestens eine LCID-Abstiegsregel umfassen; und
der Prozess des Sequenzierens der MAC-SDU-Daten innerhalb von MAC-PDUs in empfangenen MAC-Daten gemäß den Regeln des Sequenzierens der MAC-SDUs Folgendes umfasst: Sequenzieren der MAC-SDU-Daten innerhalb von MAC-PDUs in den empfangenen MAC-Daten gemäß der LCID-Abstiegsregel.

3. Daten-Scheduling-Verfahren nach Anspruch 1 oder 2, wobei
die Kriterien des Multiplexens von MAC-PDUs mindestens eine Regel des sequenziellen Sendens umfassen; und
der Prozess des Multiplexens der Daten der sequenzierten MAC-SDUs gemäß den Kriterien des Multiplexens von MAC-PDUs Folgendes umfasst: Multiplexen der Daten der sequenzierten MAC-SDUs gemäß der Regel des sequenziellen Sendens.

4. Daten-Scheduling-Verfahren nach Anspruch 3, wobei der Prozess des Multiplexens der Daten der sequenzierten MAC-SDUs gemäß der Regel des sequenziellen Sendens Folgendes umfasst:
Multiplexen der Daten der sequenzierten MAC-SDUs gemäß einer Regel "wer zuerst kommt, wird zuerst übertragen".

5. Daten-Scheduling-Verfahren nach einem der Ansprüche 1 bis 4, wobei
die Kriterien des Multiplexens von MAC-PDUs mindestens eine Regel der Vermeidung von Kreuzmultiplexen umfassen; und
der Prozess des Multiplexens der Daten der sequenzierten MAC-SDUs gemäß den Kriterien des Multiplexens von MAC-PDUs Folgendes umfasst: Multiplexen der Daten der sequenzierten MAC-SDUs gemäß der Regel der Vermeidung von Kreuzmultiplexen.

6. Daten-Scheduling-Verfahren nach Anspruch 5, wobei der Prozess des Multiplexens der Daten der sequenzierten MAC-SDUs gemäß der Regel der Vermeidung von Kreuzmultiplexen Folgendes umfasst:
zuerst Multiplexen der Daten der sequenzierten MAC-SDUs eines Dienstes; und
Multiplexen der Daten der sequenzierten MAC-SDUs eines anderen Dienstes nach Abschluss des Multiplexens der Daten der sequenzierten MAC-SDUs des Dienstes.

7. Daten-Scheduling-Verfahren nach einem der Ansprüche 1 bis 6, wobei
die Kriterien des Multiplexens von MAC-PDUs mindestens eine Regel umfassen, einen Dienst höherer Priorität zuerst zu senden; und
der Prozess des Multiplexens der Daten der sequenzierten MAC-SDUs gemäß den Kriterien des Multiplexens von MAC-PDUs Folgendes umfasst: Multiplexen der Daten der sequenzierten MAC-SDUs gemäß der Regel des Sendens, den Dienst höherer Priorität zuerst zu senden.

8. Daten-Scheduling-Verfahren nach Anspruch 7, wobei der Prozess des Multiplexens der Daten der sequenzierten MAC-SDUs innerhalb von MAC-PDUs gemäß der Regel, den Dienst höherer Priorität zuerst zu senden, Folgendes umfasst:
Bestimmen von Priorität von Diensten; und
zuerst Multiplexen der Daten der sequenzierten MAC-SDUs des Dienstes höherer Priorität.

9. Daten-Scheduling-Verfahren nach Anspruch 8, wobei das Verfahren nach dem Bestimmen der Priorität der Dienste ferner Folgendes umfasst:
Scheduling der Daten der sequenzierten MAC-SDUs der Dienste gemäß aufsteigender oder absteigender Reihenfolge von Logical Channel Identifiers bzw. LCIDs der Dienste, wenn zwei oder mehr Dienste dieselbe Priorität aufweisen.

10. Evolvierter NodeB bzw. eNB zum Scheduling von Daten der Media Access Control bzw. MAC, **dadurch gekennzeichnet, dass** er Folgendes umfasst:
eine Einheit (210) zum Erhalten von Daten-Scheduling-Regeln, die dafür ausgelegt ist, Daten-Scheduling-Regeln zu erhalten, die Kriterien des Multiplexens von Protocol Data Units bzw. PDUs der MAC und Regeln des Sequenzierens von Service Data Units bzw. SDUs der MAC innerhalb von MAC-PDUs umfassen;
wobei der eNB für einen Prozess des Erhaltens der Daten-Scheduling-Regeln für Folgendes ausgelegt ist: Setzen der Daten-Scheduling-Regeln durch eine Steuerprozedur der Multimedia Broadcast Multicast Service Control Entity bzw. MCE und Konfigurieren von MAC-Schicht-Daten-Scheduling-Regeln des eNB gemäß den Daten-Scheduling-Regeln, damit die MAC-Schicht-Daten-Scheduling-Regeln mehrerer eNBs in demselben Single Frequency Network Area bzw. SFA dieselben werden, wobei die mehreren eNBs den eNB umfassen,
wobei der eNB für einen Prozess des Setzens der Daten-Scheduling-Regeln durch die MCE-Steuerprozedur für Folgendes ausgelegt ist: Empfangen einer Steuernachricht, die die Daten-Scheduling-Regeln enthält, von der MCE;
eine MAC-SDU-Sequenzierungseinheit (220), die dafür ausgelegt ist, Daten von MAC-SDUs innerhalb von MAC-PDUs in empfangenen MAC-Daten gemäß den durch die Einheit (210) zum Erhalten von Daten-Scheduling-Regeln erhaltenen MAC-SDU-Sequenzierungsregeln zu sequenzieren; und
eine MAC-PDU-Multiplexereinheit (230), die dafür ausgelegt ist, die durch die MAC-SDU-Sequenzierungseinheit sequenzierten Daten der MAC-SDUs gemäß den durch die Einheit (210) zum Erhalten von Daten-Scheduling-Regeln erhaltenen Kriterien des Multiplexens von MAC-PDUs zu multiplexen.

11. Daten-Scheduling-System zum Scheduling von Daten der Media Access Control bzw. MAC, **dadurch gekennzeichnet, dass** es Folgendes umfasst:
einen evolvierten NodeB bzw. eNB, der für Folgendes ausgelegt ist: Erhalten von Daten-Scheduling-Regeln, die Kriterien des Multiplexens von Media Access Control Protocol Data Units bzw. MAC-PDUs und Regeln des Sequenzierens von Service Data Units bzw. SDUs der MAC innerhalb von MAC-PDUs umfassen, Daten von MAC-SDUs innerhalb von MAC-PDUs in empfangenen MAC-Daten gemäß den Regeln des Sequenzierens von MAC-SDUs zu sequenzieren und die Daten der sequenzierten MAC-SDUs gemäß den Kriterien des Multiplexens von MAC-PDUs zu multiplexen;
wobei der eNB für einen Prozess des Erhaltens der Daten-Scheduling-Regeln für Folgendes ausgelegt ist: Setzen der Daten-Scheduling-Regeln durch eine Steuerprozedur der Multimedia Broadcast Multicast Service Control Entity bzw. MCE und Konfigurieren von MAC-Schicht-Daten-Scheduling-Regeln des eNB gemäß den Daten-Scheduling-Regeln, damit die MAC-Schicht-Daten-Scheduling-Regeln mehrerer eNBs in demselben Single Frequency Network Area bzw. SFA dieselben werden, wobei die mehreren eNBs den eNB umfassen, und
wobei der eNB für einen Prozess des Setzens der Daten-Scheduling-Regeln durch die MCE-Steuerprozedur für Folgendes ausgelegt ist: Empfangen einer Steuernachricht, die die Daten-Scheduling-Regeln enthält, von der MCE.

## Revendications

1. Procédé d'ordonnancement de données permettant d'ordonnancer des données de commande d'accès au support, dite MAC, **caractérisé en ce qu'**il comprend l'étape consistant à :
obtenir, au moyen d'un NodeB évolué, dit eNB, des règles d'ordonnancement de données (S201) comprenant des critères de multiplexage d'unités de données de protocole, dites PDU, MAC et des règles de séquencement d'unités de données de service, dites SDU, MAC à l'intérieur de PDU MAC ;
une étape consistant à obtenir les règles d'ordonnancement de données comprenant les étapes consistant à : établir les règles d'ordonnancement de données grâce à une procédure de commande d'entité de commande de service de diffusion multimédia multidestination, dite MCE, et configurer des règles d'ordonnancement de données de la couche MAC du eNB conformément aux règles d'ordonnancement de données pour rendre identiques les règles d'ordonnancement de données de la couche MAC d'une pluralité de eNB dans la même zone de réseau monofréquence, dite SFA, ladite pluralité de eNB comprenant le eNB,
une étape consistant à établir les règles d'ordonnancement de données grâce à la procédure de commande de MCE comprenant les étapes consistant à :
recevoir un message de commande (S301) contenant les règles d'ordonnancement de données en provenance de la MCE (S302) ;
séquencer, au moyen du eNB, des données de SDU MAC à l'intérieur de PDU MAC dans des données MAC reçues conformément aux règles de séquencement de SDU MAC (S202) ; et
multiplexer, au moyen du eNB, les données des SDU MAC séquencées conformément aux critères de multiplexage de PDU MAC (S203).

2. Procédé d'ordonnancement de données selon la revendication 1,
les règles de séquencement de SDU MAC à l'intérieur de PDU MAC comprenant au moins une règle ascendante d'identificateurs de canal logique, dits LCID ;
l'étape consistant à séquencer les données de SDU MAC à l'intérieur de PDU MAC dans des données MAC reçues conformément aux règles de séquencement des SDU MAC comprenant l'étape consistant à : séquencer les données de SDU MAC à l'intérieur de PDU MAC dans les données MAC reçues conformément à la règle ascendante de LCID ;
ou
les règles de séquencement de SDU MAC à l'intérieur de PDU MAC comprenant au moins une règle descendante de LCID ; et
l'étape consistant à séquencer les données de SDU MAC à l'intérieur de PDU MAC dans des données MAC reçues conformément aux règles de séquencement des SDU MAC comprenant l'étape consistant à : séquencer les données de SDU MAC à l'intérieur de PDU MAC dans les données MAC reçues conformément à la règle descendante de LCID.

3. Procédé d'ordonnancement de données selon la revendication 1 ou 2,
les critères de multiplexage de PDU MAC comprenant au moins une règle de transmission séquentielle ; et
l'étape consistant à multiplexer les données des SDU MAC séquencées conformément aux critères de multiplexage de PDU MAC comprenant l'étape consistant à : multiplexer les données des SDU MAC séquencées conformément à la règle de transmission séquentielle.

4. Procédé d'ordonnancement de données selon la revendication 3,
l'étape consistant à multiplexer les données des SDU MAC séquencées conformément à la règle de transmission séquentielle comprenant l'étape consistant à : multiplexer les données des SDU MAC séquencées conformément à une règle de type "premier arrivé, premier transmis".

5. Procédé d'ordonnancement de données selon l'une des revendications 1 à 4,
les critères de multiplexage de PDU MAC comprenant au moins une règle d'évitement d'intermultiplexage ; et
l'étape consistant à multiplexer les données des SDU MAC séquencées conformément aux critères de multiplexage de PDU MAC comprenant l'étape consistant à : multiplexer les données des SDU MAC séquencées conformément à la règle d'évitement d'intermultiplexage.

6. Procédé d'ordonnancement de données selon la revendication 5,
l'étape consistant à : multiplexer les données des SDU MAC séquencées conformément à la règle d'évitement d'intermultiplexage comprenant les étapes consistant à :
multiplexer en premier les données des SDU MAC séquencées d'un service particulier ; et
multiplexer les données des SDU MAC séquencées d'un autre service après avoir multiplexé les données des SDU MAC séquencées du service particulier.

7. Procédé d'ordonnancement de données selon l'une des revendications 1 à 6,
les critères de multiplexage de PDU MAC comprenant au moins une règle de transmission en premier d'un service d'ordre de priorité plus élevé ; et
l'étape consistant à multiplexer les données des SDU MAC séquencées conformément aux critères de multiplexage de PDU MAC comprenant l'étape consistant à : multiplexer les données des SDU MAC séquencées conformément à la règle de transmission en premier du service d'ordre de priorité plus élevé.

8. Procédé d'ordonnancement de données selon la revendication 7,
l'étape consistant à multiplexer les données des SDU MAC séquencées à l'intérieur de PDU MAC conformément à la règle de transmission en premier du service d'ordre de priorité plus élevé comprenant les étapes consistant à :
établir l'ordre de priorité de services ; et
multiplexer en premier les données des SDU MAC séquencées du service d'ordre de priorité plus élevé.

9. Procédé d'ordonnancement de données selon la revendication 8, comprenant en outre, suite à l'étape consistant à établir l'ordre de priorité des services, l'étape consistant à :
ordonnancer les données des SDU MAC séquencées des services conformément à l'ordre ascendant ou descendant d'identifiants de canal logique, dits LCID, des services si au moins deux services possèdent le même ordre de priorité.

10. NodeB évolué, dit eNB, permettant d'ordonnancer des données de commande d'accès au support, dite MAC, **caractérisé en ce qu'**il comprend :
une unité (210) d'obtention de règles d'ordonnancement de données, conçue pour obtenir des règles d'ordonnancement de données comprenant des critères de multiplexage d'unités de données de protocole, dites PDU, MAC et des règles de séquencement d'unités de données de service, dites SDU, MAC à l'intérieur de PDU MAC;
pour une étape consistant à obtenir les règles d'ordonnancement de données, le eNB étant conçu pour : établir les règles d'ordonnancement de données grâce à une procédure de commande d'entité de commande de service de diffusion multimédia multidestination, dite MCE, et configurer des règles d'ordonnancement de données de la couche MAC du eNB conformément aux règles d'ordonnancement de données pour rendre identiques les règles d'ordonnancement de données de la couche MAC d'une pluralité de eNB dans la même zone de réseau monofréquence, dite SFA, ladite pluralité de eNB comprenant le eNB,
pour une étape consistant à établir les règles d'ordonnancement de données grâce à la procédure de commande de MCE, le eNB étant conçu pour recevoir un message de commande contenant les règles d'ordonnancement de données en provenance de la MCE;
une unité (220) de séquencement de SDU MAC, conçue pour séquencer des données de SDU MAC à l'intérieur de PDU MAC dans des données MAC reçues conformément aux règles de séquencement de SDU MAC obtenues par l'unité (210) d'obtention de règles d'ordonnancement de données ; et
une unité (230) de multiplexage de PDU MAC, conçue pour multiplexer les données des SDU MAC séquencées par l'unité de séquencement de SDU MAC conformément aux critères de multiplexage de PDU MAC obtenus par l'unité (210) d'obtention de règles d'ordonnancement de données.

11. Système d'ordonnancement de données permettant d'ordonnancer des données de commande d'accès au support, dite MAC, **caractérisé en ce qu'**il comprend :
un NodeB évolué, dit eNB, conçu pour : obtenir des règles d'ordonnancement de données comprenant des critères de multiplexage d'unités de données de protocole de commande d'accès au support, dits PDU MAC, et des règles de séquencement d'unités de données de service, dites SDU, MAC à l'intérieur de PDU MAC, séquencer des données de SDU MAC à l'intérieur de PDU MAC dans des données MAC reçues conformément aux règles de séquencement de SDU MAC, et multiplexer les données des SDU MAC séquencées conformément aux critères de multiplexage de PDU MAC ;
pour une étape consistant à obtenir les règles d'ordonnancement de données, le eNB étant conçu pour : établir les règles d'ordonnancement de données grâce à une procédure de commande d'entité de commande de service de diffusion multimédia multidestination, dite MCE, et configurer des règles d'ordonnancement de données de la couche MAC du eNB conformément aux règles d'ordonnancement de données pour rendre identiques les règles d'ordonnancement de données de la couche MAC d'une pluralité de eNB dans la même zone de réseau monofréquence, dite SFA, ladite pluralité de eNB comprenant le eNB, et
pour une étape consistant à établir les règles d'ordonnancement de données grâce à la procédure de commande de MCE, le eNB étant conçu pour recevoir un message de commande contenant les règles d'ordonnancement de données en provenance de la MCE.
